# EUROPEAN PATENT SPECIFICATION

(11) **EP 2 516 578 B1**
(45) Date of publication and mention of the grant of the patent: **22.06.2016**
(21) Application number: 10799241.4
(22) Date of filing: 21.12.2010
(51) Int. Cl.: C09K 5/04

(54) **COMPOSITIONS COMPRISING TETRAFLUOROPROPENE AND DIFLUOROMETHANE AND USES THEREOF**
ZUSAMMENSETZUNGEN MIT TETRAFLUORPROPEN UND DIFLUORMETHAN UND IHRE VERWENDUNG
COMPOSITIONS COMPRENANT DU TÉTRAFLUOROPROPÈNE ET DU DIFLUOROMÉTHANE ET UTILISATIONS ASSOCIÉES

(30) Priority: 21.12.2009 US 288504 P
(43) Date of publication of application: 31.10.2012
(73) Proprietor: The Chemours Company FC, LLC, Wilmington DE 19801 (US)
(72) Inventor: LECK, Thomas, J., Hockessin Delaware 19707 (US); MINOR, Barbara, Haviland, Elkton Maryland 21921 (US)
(74) Representative: Matthews, Derek Peter
(86) International application number: PCT/US2010/061611
(87) International publication number: WO 2011/084813

(56) References cited:
- EP-A2- 2 149 592
- WO-A1-2009/116282
- WO-A1-2010/002016
- WO-A1-2010/040928
- WO-A2-2010/059677
- US-A1- 2006 243 944

## Description

### BACKGROUND

### 1. Field of the Disclosure.

The present disclosure relates to a composition for use in heat pump systems wherein the composition comprises tetrafluoropropene and difluoromethane.

### 2. Description of Related Art.

The refrigeration industry has been working for the past few decades to find replacement refrigerants for the ozone depleting chlorofluorocarbons (HFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, industry is facing regulations relating to global warming potential (GWP) for refrigerants used in mobile air-conditioning. Should the regulations be more broadly applied in the future, for instance for stationary air conditioning and refrigeration systems, an even greater need will be felt for refrigerants that can be used in all areas of the refrigeration and air-conditioning industry. Uncertainty as to the ultimate regulatory requirements relative to GWP, have forced the industry to consider multiple candidate compounds and mixtures.

Currently proposed replacement refrigerants for HFC refrigerants and refrigerant blends include HFC-152a, pure hydrocarbons, such as butane or propane, or "natural" refrigerants such as CO₂. Each of these suggested replacements has problems including toxicity, flammability, low energy efficiency, or requires major equipment design modifications. New replacements are also being proposed for HCFC-22, R-134a, R-404A, R-507, R-407C and R-410A, among others. Uncertainty as to what regulatory requirements relative to GWP will ultimately be adopted have forced the industry to consider multiple candidate compounds and mixtures that balance the need for low GWP, non-flammability or low flammability, and existing system performance parameters.

### BRIEF SUMMARY

Compositions comprising 2,3,3,3-tetrafluoropropene and difluoromethane have been found to possess certain properties to allow replacement of higher GWP refrigerants currently in use, including R-134a, R404A and R410A.

Thus, the invention provides the use of a composition comprising about 78.5 weight percent 2,3,3,3-tetrafluoropropene and about 21.5 weight percent difluoromethane in an automotive heat pump.

Also disclosed herein is an automotive air conditioner or heat pump containing a composition comprising about 78.5 weight percent 2,3,3,3-tetrafluoropropene and about 21.5 weight percent difluoromethane.

### DETAILED DESCRIPTION

Before addressing details of embodiments described below, some terms are defined or clarified.

### Definitions

As used herein, the term heat transfer composition means a composition used to carry heat from a heat source to a heat sink.

A heat source is defined as any space, location, object or body from which it is desirable to add, transfer, move or remove heat. Examples of heat sources are spaces (open or enclosed) requiring refrigeration or cooling, such as refrigerator or freezer cases in a supermarket, building spaces requiring air conditioning, industrial water chillers or the passenger compartment of an automobile requiring air conditioning. In some embodiments, the heat transfer composition may remain in a constant state throughout the transfer process (i.e., not evaporate or condense). In other embodiments, evaporative cooling processes may utilize heat transfer compositions as well.

A heat sink is defined as any space, location, object or body capable of absorbing heat. A vapor compression refrigeration system is one example of such a heat sink.

A heat transfer system is the system (or apparatus) used to produce a heating or cooling effect in a particular space. A heat transfer system may be a mobile system or a stationary system.

Examples of heat transfer systems include but are not limited to air conditioners, freezers, refrigerators and heat pumps.
As used herein, mobile heat transfer system refers to any refrigeration, air conditioner or heating apparatus incorporated into a transportation unit for the road, rail, sea or air.

Refrigeration capacity (also referred to as cooling capacity) is a term which defines the change in enthalpy of a refrigerant in an evaporator per pound of refrigerant circulated, or the heat removed by the refrigerant in the evaporator per unit volume of refrigerant vapor exiting the evaporator (volumetric capacity). The refrigeration capacity is a measure of the ability of a refrigerant or heat transfer composition to produce cooling. Therefore, the higher the capacity, the greater the cooling that is produced. Cooling rate refers to the heat removed by the refrigerant in the evaporator per unit time.

Coefficient of performance (COP) is the amount of heat removed divided by the required energy input to operate the cycle. The higher the COP, the higher is the energy efficiency. COP is directly related to the energy efficiency ratio (EER) that is the efficiency rating for refrigeration or air conditioning equipment at a specific set of internal and external temperatures.

The term "subcooling" refers to the reduction of the temperature of a liquid below that liquid's saturation point for a given pressure. The saturation point is the temperature at which the vapor is completely condensed to a liquid, but subcooling continues to cool the liquid to a lower temperature liquid at the given pressure. By cooling a liquid below the saturation temperature (or bubble point temperature), the net refrigeration capacity can be increased. Subcooling thereby improves refrigeration capacity and energy efficiency of a system. Subcool amount is the amount of cooling below the saturation temperature (in degrees).

Superheat is a term that defines how far above its saturation vapor temperature (the temperature at which, if the composition is cooled, the first drop of liquid is formed, also referred to as the "dew point") a vapor composition is heated.

Temperature glide (sometimes referred to simply as "glide") is the absolute value of the difference between the starting and ending temperatures of a phase-change process by a refrigerant within a component of a refrigerant system, exclusive of any subcooling or superheating. This term may be used to describe condensation or evaporation of a near azeotrope or non-azeotropic composition. When referring to the temperature glide of a refrigeration, air conditioning or heat pump system, it is common to provide the average temperature glide being the average of the temperature glide in the evaporator and the temperature glide in the condenser.

By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation. Additionally, an azeotropic composition will not fractionate upon leakage from a refrigeration or air conditioning system.

A near-azeotropic composition (also commonly referred to as an "azeotrope-like composition") is a substantially constant boiling liquid admixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the admixture distills/refluxes without substantial composition change. Another way to characterize a near-azeotropic composition is that the bubble point vapor pressure and the dew point vapor pressure of the composition at a particular temperature are substantially the same. Herein, a composition is near-azeotropic if, after 50 weight percent of the composition is removed, such as by evaporation or boiling off, the difference in vapor pressure between the original composition and the composition remaining after 50 weight percent of the original composition has been removed is less than about 10 percent.

A non-azeotropic composition is a mixture of two or more substances that behaves as a simple mixture rather than a single substance. One way to characterize a non azeotropic composition is that the vapor produced by partial evaporation or distillation of the liquid has a substantially different composition as the liquid from which it was evaporated or distilled, that is, the admixture distills/refluxes with substantial composition change. Another way to characterize a non-azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than about 10 percent.

As used herein, the term "lubricant" means any material added to a composition or a compressor (and in contact with any heat transfer composition in use within any heat transfer system) that provides lubrication to the compressor to aid in preventing parts from seizing.

As used herein, compatibilizers are compounds which improve solubility of the hydrofluorocarbon of the disclosed compositions in heat transfer system lubricants. In some embodiments, the compatibilizers improve oil return to the compressor. In some embodiments, the composition is used with a system lubricant to reduce oil-rich phase viscosity.

As used herein, oil-return refers to the ability of a heat transfer composition to carry lubricant through a heat transfer system and return it to the compressor. That is, in use, it is not uncommon for some portion of the compressor lubricant to be carried away by the heat transfer composition from the compressor into the other portions of the system. In such systems, if the lubricant is not efficiently returned to the compressor, the compressor will eventually fail due to lack of lubrication.

As used herein, "ultra-violet" dye is defined as a UV fluorescent or phosphorescent composition that absorbs light in the ultra-violet or "near" ultra-violet region of the electromagnetic spectrum. The fluorescence produced by the UV fluorescent dye under illumination by a UV light that emits at least some radiation with a wavelength in the range of from 10 nanometers to about 775 nanometers may be detected.

Flammability is a term used to mean the ability of a composition to ignite and/or propagate a flame. For refrigerants and other heat transfer compositions, the lower flammability limit ("LFL") is the minimum concentration of the heat transfer composition in air that is capable of propagating a flame through a homogeneous mixture of the composition and air under test conditions specified in ASTM (American Society of Testing and Materials) E681. The upper flammability limit ("UFL") is the maximum concentration of the heat transfer composition in air that is capable of propagating a flame through a homogeneous mixture of the composition and air under the same test conditions. In order to be classified by ASHRAE (American Society of Heating, Refrigerating and Air-Conditioning Engineers) as non-flammable, a refrigerant must be non-flammable under the conditions of ASTM E681 as formulated in both the liquid and vapor phase as well as non-flammable in both the liquid and vapor phases that result during leakage scenarios.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100 year time horizon is commonly the value referenced. For mixtures, a weighted average can be calculated based on the individual GWPs for each component.

Ozone-depletion potential (ODP) is a number that refers to the amount of ozone depletion caused by a substance. The ODP is the ratio of the impact on ozone of a chemical compared to the impact of a similar mass of CFC-11 (fluorotrichloromethane). Thus, the ODP of CFC-11= is defined to be 1.0. Other CFCs and HCFCs have ODPs that range from 0.01 to 1.0. HFCs have zero ODP because they do not contain chlorine.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method or apparatus that includes materials, steps, features, components, or elements, in addition to those literally disclosed provided that these additional included materials, steps, features, components, or elements do materially affect the basic and novel characteristic(s) of the claimed invention. The term 'consisting essentially of occupies a middle ground between "comprising" and 'consisting of.

Where applicants have defined an invention or a portion thereof with an open-ended term such as "comprising," it should be readily understood that (unless otherwise stated) the description should be interpreted to also describe such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

### Compositions

Disclosed is a composition comprising about 78.5 weight percent 2,3,3,3-tetrafluoropropene and about 21.5 weight percent difluoromethane. 2,3,3,3-tetrafluoropropene may also be referred to as HFO-1234yf, HFC-1234yf, or R1234yf. HFO-1234yf may be made by methods known in the art, such as by dehydrofluorination 1,1,1,2,3-pentafluoropropane (HFC-245eb) or 1,1,1,2,2-pentafluoropropane (HFC-245cb). Difluoromethane (HFC-32 or R32) is commercially available or may be made by methods known in the art, such as by dechlorofluorination of methylene chloride.

Both HFO-1234yf and HFC-32 are being considered as low GWP replacements for certain refrigerants and refrigerant mixtures that have relatively high GWP. In particular, R410A (ASHRAE designation for a mixture containing 50 wt% HFC-32 and 50 wt% pentafluoroethane, or HFC-125) has a global warming potential of 2088 and will be in need of replacement when regulations related to global warming of refrigerants are enacted. Additionally, R404A (ASHRAE designation for a mixture containing 44 wt% HFC-125, 52 wt% HFC-143a (1,1,1-trifluoroethane), and 4 wt% HFC-134a) has a GWP of 3922 and will be in need of replacement. Further, R-507 (ASHRAE designation for a mixture containing 50 wt% HFC-125 and 50 wt% HFC-143a), which has virtually identical properties to R404A and can therefore be used in many R404A systems, has a GWP equal to 3985, and therefore does not provide a lower GWP replacement for R404A, but will be in need of replacement as well.

Tetrafluoroethane, in particular 1,1,1,2-tetrafluoroethane (HFC-134a), currently used as a refrigerant in many applications, has a GWP of 1430 and is in need of replacement. Of note is the use of HFC-134a in automotive heat pumps. In the invention, a composition having about 21.5 weight percent HFC-32 and about 78.5 weight percent HFO-1234yf demonstrates significantly improved heating capacity versus HFC-134a, but has a GWP below 150, which meets the European F-Gas directive.

The compositions of the present invention are non-azeotropic compositions, since compositions comprising 43 to 99 weight percent 2,3,3,3-tetrafluoropropene and 57 to 1 weight percent difluoromethane are non-azeotropic. A non-azeotropic composition may have certain advantages over azeotropic or near azeotropic mixtures. For instance, the temperature glide of a non-azeotropic composition provides an advantage in counter current flow heat exchanger arrangements.

Compositions with higher capacity than the refrigerant being replaced provide reduced carbon fingerprint by allowing a lower charge size (less refrigerant will be necessary to achieve the same cooling effect). Therefore, even with a higher GWP such compositions may provide a net reduced environmental impact. Additionally, new equipment may be designed to provide even greater energy efficiency improvements, thus also minimizing the environmental impact of using a new refrigerant.

In some embodiments, in addition to the tetrafluoropropene and difluoromethane, the disclosed compositions may comprise optional other components.

In some embodiments, the optional other components (also referred to herein as additives) in the compositions disclosed herein may comprise one or more components selected from the group consisting of lubricants, dyes (including UV dyes), solubilizing agents, compatibilizers, stabilizers, tracers, perfluoropolyethers, anti wear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof. Indeed, many of these optional other components fit into one or more of these categories and may have qualities that lend themselves to achieve one or more performance characteristic.

In some embodiments, one or more additive present in small amounts relative to the overall composition. In some embodiments, the amount of additive(s) concentration in the disclosed compositions is from less than about 0.1 weight percent to as much as about 5 weight percent of the total composition. In some embodiments of the present invention, the additives are present in the disclosed compositions in an amount between about 0.1 weight percent to about 3.5 weight percent of the total composition. The additive component(s) selected for the disclosed composition is selected on the basis of the utility and/or individual equipment components or the system requirements.

In some embodiments, the lubricant is a mineral oil lubricant. In some embodiments, the mineral oil lubricant is selected from the group consisting of paraffins (including straight carbon chain saturated hydrocarbons, branched carbon chain saturated hydrocarbons, and mixtures thereof), naphthenes (including saturated cyclic and ring structures), aromatics (those with unsaturated hydrocarbons containing one or more ring, wherein one or more ring is characterized by alternating carbon-carbon double bonds) and non-hydrocarbons (those molecules containing atoms such as sulfur, nitrogen, oxygen and mixtures thereof), and mixtures and combinations of thereof.

Some embodiments may contain one or more synthetic lubricant. In some embodiments, the synthetic lubricant is selected from the group consisting of alkyl substituted aromatics (such as benzene or naphthalene substituted with linear, branched, or mixtures of linear and branched alkyl groups, often generically referred to as alkylbenzenes), synthetic paraffins and napthenes, poly (alpha olefins), polyglycols (including polyalkylene glycols), dibasic acid esters, polyesters, neopentyl esters, polyvinyl ethers (PVEs), silicones, silicate esters, fluorinated compounds, phosphate esters, polycarbonates and mixtures thereof, meaning mixtures of the any of the lubricants disclosed in this pragraph.

The lubricants as disclosed herein may be commercially available lubricants. For instance, the lubricant may be paraffinic mineral oil, sold by BVA Oils as BVM 100 N, naphthenic mineral oils sold by Crompton Co. under the trademarks Suniso^{®} 1GS, Suniso^{®} 3GS and Suniso^{®} 5GS, naphthenic mineral oil sold by Pennzoilunder the trademark-Sontex^{®} 372LT,, naphthenic mineral oil sold by Calumet Lubricants under the trademark Calumet^{®} RO-30,, linear alkylbenzenes sold by Shrieve Chemicals under the trademarks Zerol^{®} 75, Zerol^{®} 150 and Zerol^{®} 500 and branched alkylbenzene sold by Nippon Oil as HAB 22, polyol esters (POEs) sold under the trademark Castrol^{®} 100 by Castrol, United Kingdom, polyalkylene glycols (PAGs) such as RL-488A from Dow (Dow Chemical, Midland, Michigan), and mixtures thereof, meaning mixtures of any of the lubricants disclosed in this paragraph.

The lubricants used with the present invention may be designed for use with hydrofluorocarbon refrigerants and may be miscible with compositions as disclosed herein under compression refrigeration and air-conditioning apparatus' operating conditions. In some embodiments, the lubricants are selected by considering a given compressor's requirements and the environment to which the lubricant will be exposed.

In the compositions of the present invention including a lubricant, the lubricant is present in an amount of less than 5.0 weight % to the total composition. In other embodiments, the amount of lubricant is between about 0.1 and 3.5 weight % of the total composition.

Notwithstanding the above weight ratios for compositions disclosed herein, it is understood that in some heat transfer systems, while the composition is being used, it may acquire additional lubricant from one or more equipment components of such heat transfer system. For example, in some refrigeration, air conditioning and heat pump systems, lubricants may be charged in the compressor and/or the compressor lubricant sump. Such lubricant would be in addition to any lubricant additive present in the refrigerant in such a system. In use, the refrigerant composition when in the compressor may pick up an amount of the equipment lubricant to change the refrigerant-lubricant composition from the starting ratio.

In such heat transfer systems, even when the majority of the lubricant resides within the compressor portion of the system, the entire system may contain a total composition with as much as about 75 weight percent to as little as about 1.0 weight percent of the composition being lubricant. In some systems, for example supermarket refrigerated display cases, the system may contain about 3 weight percent lubricant (over and above any lubricant present in the refrigerant composition prior to charging the system) and 97 weight percent refrigerant. In another embodiment, in some systems, for example mobile air conditioning systems, the system may contain about 20 weight percent lubricant (over and above any lubricant present in the refrigerant composition prior to charging the system) and about 80 weight percent refrigerant.

The additive used with the compositions of the present invention may include at least one dye. The dye may be at least one ultra-violet (UV) dye. The UV dye may be a fluorescent dye. The fluorescent dye may be selected from the group consisting of naphthalimides, perylenes, coumarins, anthracenes, phenanthracenes, xanthenes, thioxanthenes, naphthoxanthenes, fluoresceins, and derivatives of said dye, and combinations thereof, meaning mixtures of any of the foregoing dyes or their derivatives disclosed in this paragraph.

In some embodiments, the disclosed compositions contain from about 0.001 weight percent to about 1.0 weight percent UV dye In other embodiments, the UV dye is present in an amount of from about 0.005 weight percent to about 0.5 weight percent; and in other embodiments, the UV dye is present in an amount of from 0.01 weight percent to about 0.25 weight percent of the total composition.

UV dye is a useful component for detecting leaks of the composition by permitting one to observe the fluorescence of the dye at or in the vicinity of a leak point in an apparatus (e.g., refrigeration unit, air-conditioner or heat pump). The UV emission, e.g., fluorescence from the dye may be observed under an ultra-violet light. Therefore, if a composition containing such a UV dye is leaking from a given point in an apparatus, the fluorescence can be detected at the leak point, or in the vicinity of the leak point.

The additive which may be used with the compositions of the present invention may include at least one solubilizing agent selected to improve the solubility of one or more dye in the disclosed compositions. In some embodiments, the weight ratio of dye to solubilizing agent ranges from about 99:1 to about 1:1. The solubilizing agents include at least one compound selected from the group consisting of hydrocarbons, hydrocarbon ethers, polyoxyalkylene glycol ethers (such as dipropylene glycol dimethyl ether), amides, nitriles, ketones, chlorocarbons (such as methylene chloride, trichloroethylene, chloroform, or mixtures thereof), esters, lactones, aromatic ethers, fluoroethers and 1,1,1-trifluoroalkanes and mixtures thereof, meaning mixtures of any of the solubilizing agents disclosed in this paragraph.

In some embodiments, at least one compatibilizer is selected to improve the compatibility of one or more lubricant with the disclosed compositions. The compatibilizer may be selected from the group consisting of hydrocarbons, hydrocarbon ethers, polyoxyalkylene glycol ethers (such as dipropylene glycol dimethyl ether), amides, nitriles, ketones, chlorocarbons (such as methylene chloride, trichloroethylene, chloroform, or mixtures thereof), esters, lactones, aromatic ethers, fluoroethers, 1,1,1-trifluoroalkanes, and mixtures thereof, meaning mixtures of any of the compatibilizers disclosed in this paragraph.

The solubilizing agent and/or compatibilizer may be selected from the group consisting of hydrocarbon ethers consisting of the ethers containing only carbon, hydrogen and oxygen, such as dimethyl ether (DME) and mixtures thereof, meaning mixtures of any of the hydrocarbon ethers disclosed in this paragraph.

The compatibilizer may be linear or cyclic aliphatic or aromatic hydrocarbon compatibilizer containing from 3 to 15 carbon atoms. The compatibilizer may be at least one hydrocarbon, which may be selected from the group consisting of at least propane, n-butane, isobutane, pentanes, hexanes, octanes, nonane, and decanes, among others. Commercially available hydrocarbon compatibilizers include but are not limited to those from Exxon Chemical (USA) sold under the trademarks Isopar^{®} H, a mixture of undecan (C₁₁) and dodecane(C₁₂) (a high purity C₁₁ to C₁₂ iso-paraffinic), Aromatic 150 (a C₉ to C₁₁ aromatic) (Aromatic 200 (a C₉ to C₁₅ aromatic) and Naptha 140 (a mixture of C₅ to C₁₁ paraffins, naphthenes and aromatic hydrocarbons) and mixtures thereof, meaning mixtures of any of the hydrocarbons disclosed in this paragraph.

The additive may alternatively be at least one polymeric compatibilizer. The polymeric compatibilizer may be a random copolymer of fluorinated and non-fluorinated acrylates, wherein the polymer comprises repeating units of at least one monomer represented by the formulae CH₂=C(R¹)CO₂R², CH₂=C(R³)C₆H₄R⁴, and CH₂=C(R⁵)C₆H₄XR⁶, wherein X is oxygen or sulfur; R¹, R³, and R⁵ are independently selected from the group consisting of H and C₁-C₄ alkyl radicals; and R², R⁴, and R⁶ are independently selected from the group consisting of carbon-chain-based radicals containing C, and F, and may further contain H, Cl, ether oxygen, or sulfur in the form of thioether, sulfoxide, or sulfone groups and mixtures thereof. Examples of such polymeric compatibilizers include those commercially available from E. I. du Pont de Nemours and Company. (Wilmington, DE, 19898, USA) under the trademark Zonyl^{®} PHS. Zonyl^{®} PHS is a random copolymer made by polymerizing 40 weight percent CH₂=C(CH₃)CO₂CH₂CH₂(CF₂CF₂)ₘF (also referred to as Zonyl^{®} fluoromethacrylate or ZFM) wherein m is from 1 to 12, primarily 2 to 8, and 60 weight percent lauryl methacrylate (CH₂=C(CH₃)CO₂(CH₂)₁₁CH₃, also referred to as LMA).

In some embodiments, the compatibilizer component contains from about 0.01 to 30 weight percent (based on total amount of compatibilizer) of an additive which reduces the surface energy of metallic copper, aluminum, steel, or other metals and metal alloys thereof found in heat exchangers in a way that reduces the adhesion of lubricants to the metal. Examples of metal surface energy reducing additives include those commercially available from DuPont under the trademarks Zonyl^{®} FSA, Zonyl^{®} FSP, and Zonyl^{®} FSJ.

The additive which may be used with the compositions of the present invention may be a metal surface deactivator. The metal surface deactivator is selected from the group consisting of areoxalyl bis (benzylidene) hydrazide (CAS reg no. 6629-10-3), N,N'-bis(3,5-di-tert-butyl-4-hydroxyhydrocinnamoylhydrazine (CAS reg no. 32687-78-8), 2,2,' - oxamidobis-ethyl-(3,5-di-tert-butyl-4-hydroxyhydrocinnamate (CAS reg no. 70331-94-1), N,N'-(disalicyclidene)-1,2-diaminopropane (CAS reg no. 94-91-7) and ethylenediaminetetra-acetic acid (CAS reg no. 60-00-4) and its salts, and mixtures thereof, meaning mixtures of any of the metal surface deactivators disclosed in this paragraph.

The additive used with the compositions of the present invention may alternatively be a stabilizer selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof, meaning mixtures of any of the stabilizers disclosed in this paragraph.

The stabilizer may be selected from the group consisting of tocopherol; hydroquinone; t-butyl hydroquinone; monothiophosphates; and dithiophosphates, commercially available from Ciba Specialty Chemicals, Basel, Switzerland, hereinafter "Ciba", under the trademark Irgalube^{®} 63; dialkylthiophosphate esters, commercially available from Ciba under the trademarks Irgalube^{®} 353 and Irgalube^{®} 350, respectively; butylated triphenylphosphorothionates, commercially available from Ciba under the trademark Irgalube^{®} 232; amine phosphates, commercially available from Ciba under the trademark Irgalube^{®} 349 (Ciba); hindered phosphites, commercially available from Ciba as Irgafos^{®} 168 and Tris-(di-tert-butylphenyl)phosphite, commercially available from Ciba under the trademark Irgafos^{®} OPH; (Di-n-octyl phosphite); and iso-decyl diphenyl phosphite, commercially available from Ciba under the trademark Irgafos^{®} DDPP; trialkyl phosphates, such as trimethyl phosphate, triethylphosphate, tributyl phosphate, trioctyl phosphate, and tri(2-ethylhexyl)phosphate; triaryl phosphates including triphenyl phosphate, tricresyl phosphate, and trixylenyl phosphate; and mixed alkyl-aryl phosphates including isopropylphenyl phosphate (IPPP), and bis(t-butylphenyl)phenyl phosphate (TBPP); butylated triphenyl phosphates, such as those commercially available under the trademark Syn-O-Ad^{®} including Syn-O-Ad^{®} 8784; tert-butylated triphenyl phosphates such as those commercially available under the trademark Durad^{®}620; isopropylated triphenyl phosphates such as those commercially available under the trademarks Durad^{®} 220 and Durad^{®}110; anisole; 1,4-dimethoxybenzene; 1,4-diethoxybenzene; 1,3,5-trimethoxybenzene; myrcene, alloocimene, limonene (in particular, d-limonene); retinal; pinene; menthol; geraniol; farnesol; phytol; Vitamin A; terpinene; delta-3-carene; terpinolene; phellandrene; fenchene; dipentene; caratenoids, such as lycopene, beta carotene, and xanthophylls, such as zeaxanthin; retinoids, such as hepaxanthin and isotretinoin; bornane; 1,2-propylene oxide; 1,2-butylene oxide; n-butyl glycidyl ether; trifluoromethyloxirane; 1,1-bis(trifluoromethyl)oxirane; 3-ethyl-3-hydroxymethyl-oxetane, such as OXT-101 (Toagosei Co., Ltd); 3-ethyl-3-((phenoxy)methyl)-oxetane, such as OXT-211 (Toagosei Co., Ltd); 3-ethyl-3-((2-ethyl-hexyloxy)methyl)-oxetane, such as OXT-212 (Toagosei Co., Ltd); ascorbic acid; methanethiol (methyl mercaptan); ethanethiol (ethyl mercaptan); Coenzyme A; dimercaptosuccinic acid (DMSA); grapefruit mercaptan ((R)-2-(4-methylcyclohex-3-enyl)propane-2-thiol)); cysteine ((R)-2-amino-3-sulfanyl-propanoic acid); lipoamide (1,2-dithiolane-3-pentanamide); 5,7-bis(1,1-dimethylethyl)-3-[2,3(or 3,4)-dimethylphenyl]-2(3H)-benzofuranone, commercially available from Ciba under the trademark Irganox^{®} HP-136; benzyl phenyl sulfide; diphenyl sulfide; diisopropylamine; dioctadecyl 3,3'-thiodipropionate, commercially available from Ciba under the trademark Irganox^{®} PS 802 (Ciba); didodecyl 3,3'-thiopropionate, commercially available from Ciba under the trademark Irganox^{®} PS 800; di-(2,2,6,6-tetramethyl-4-piperidyl)sebacate, commercially available from Ciba under the trademark Tinuvin^{®} 770; poly-(N-hydroxyethyl-2,2,6,6-tetramethyl-4-hydroxy-piperidyl succinate, commercially available from Ciba under the trademark Tinuvin^{®} 622LD (Ciba); methyl bis tallow amine; bis tallow amine; phenol-alpha-naphthylamine; bis(dimethylamino)methylsilane (DMAMS); tris(trimethylsilyl)silane (TTMSS); vinyltriethoxysilane; vinyltrimethoxysilane; 2,5-difluorobenzophenone; 2',5'-dihydroxyacetophenone; 2-aminobenzophenone; 2-chlorobenzophenone; benzyl phenyl sulfide; diphenyl sulfide; dibenzyl sulfide; ionic liquids; and mixtures and combinations thereof.

The additive used with the compositions of the present invention may alternatively be an ionic liquid stabilizer. The ionic liquid stabilizer may be selected from the group consisting of organic salts that are liquid at room temperature (approximately 25 °C), those salts containing cations selected from the group consisting of pyridinium, pyridazinium, pyrimidinium, pyrazinium, imidazolium, pyrazolium, thiazolium, oxazolium and triazolium and mixtures thereof; and anions selected from the group consisting of [BF_{4]}-, [PF_{6]}-, [SbF₆]-, [CF₃SO_{3]}-, [HCF₂CF₂SO_{3]}-, [CF3HFCCF₂SO₃]-, [HCCIFCF₂SO₃]-, [(CF₃SO₂)₂N]-, [(CF₃CF₂SO₂)₂N]-, [(CF₃SO₂)₃C]-, [CF₃CO₂]-, and F- and mixtures thereof. In some embodiments, ionic liquid stabilizers are selected from the group consisting of emim BF₄ (1-ethyl-3-methylimidazolium tetrafluoroborate); bmim BF₄ (1-butyl-3-methylimidazolium tetraborate); emim PF₆ (1-methyl-3-methylimidazolium hexafluorophosphate); and bmim PF₆ (1-butyl-3-methylimidazolium hexafluorophosphate), all of which are available from Fluka (Sigma-Aldrich).

In some embodiments, the stabilizer may be a hindered phenol, which is any substituted phenol compound, including phenols comprising one or more substituted or cyclic, straight chain, or branched aliphatic substituent group, such as, alkylated monophenols including 2,6-di-tert-butyl-4-methylphenol; 2,6-di-tert-butyl-4-ethylphenol; 2,4-dimethyl-6-tertbutylphenol; tocopherol; and the like, hydroquinone and alkylated hydroquinones including t-butyl hydroquinone, other derivatives of hydroquinone; and the like, hydroxylated thiodiphenyl ethers, including 4,4'-thio-bis(2-methyl-6-tert-butylphenol); 4,4'-thiobis(3-methyl-6-tertbutylphenol); 2,2'-thiobis(4methyl-6-tert-butylphenol); and the like, alkylidene-bisphenols including,: 4,4'-methylenebis(2,6-di-tert-butylphenol); 4,4'-bis(2,6-di-tert-butylphenol); derivatives of 2,2'- or 4,4-biphenoldiols; 2,2'-methylenebis(4-ethyl-6-tertbutylpheno)-); 2,2'-methylenebis(4-methyl-6-tertbutylphenol); 4,4-butylidenebis(3-methyl-6-tert-butylphenol); 4,4-isopropylidenebis(2,6-di-tert-butylphenol); 2,2'-methylenebis(4-methyl-6-nonylphenol); 2,2'-isobutylidenebis(4,6-dimethylphenol; 2,2'-methylenebis(4-methyl-6-cyclohexylphenol, 2,2-or 4,4- biphenyldiols including 2,2'-methylenebis(4-ethyl-6-tert-butylphenol); butylated hydroxytoluene (BHT, or 2,6-di-tert-butyl-4-methylphenol), bisphenols comprising heteroatoms including 2,6-di-tert-alpha-dimethylamino-p-cresol, 4,4-thiobis(6-tert-butyl-m-cresol); and the like; acylaminophenols; 2,6-di-tert-butyl-4(N,N'-dimethylaminomethylphenol); sulfides including; bis(3-methyl-4-hydroxy-5-tert-butylbenzyl)sulfide; bis(3,5-di-tert-butyl-4-hydroxybenzyl)sulfide and mixtures thereof, meaning mixtures of any of the phenols disclosed in this paragraph.

The additive which is used with compositions of the present invention may alternatively be a tracer. The tracer may be two or more tracer compounds from the same class of compounds or from different classes of compounds. In some embodiments, the tracer is present in the compositions at a total concentration of about 50 parts per million by weight (ppm) to about 1000 ppm, based on the weight of the total composition. In other embodiments, the tracer is present at a total concentration of about 50 ppm to about 500 ppm. Alternatively, the tracer is present at a total concentration of about 100 ppm to about 300 ppm.

The tracer may be selected from the group consisting of hydrofluorocarbons (HFCs), deuterated hydrofluorocarbons, perfluorocarbons, fluoroethers, brominated compounds, iodated compounds, alcohols, aldehydes and ketones, nitrous oxide and combinations thereof. Alternatively, the tracer may be selected from the group consisting of fluoroethane, 1,1,-difluoroethane, 1,1,1-trifluoroethane, 1,1,1,3,3,3-hexafluoropropane, 1,1,1,2,3,3,3-heptafluoropropane, 1,1,1,3,3-pentafluoropropane, 1,1,1,3,3-pentafluorobutane, 1,1,1,2,3,4,4,5,5,5-decafluoropentane, 1,1,1,2,2,3,4,5,5,6,6,7,7,7-tridecafluoroheptane, iodotrifluoromethane, deuterated hydrocarbons, deuterated hydrofluorocarbons, perfluorocarbons, fluoroethers, brominated compounds, iodated compounds, alcohols, aldehydes, ketones, nitrous oxide (N₂O) and mixtures thereof. In some embodiments, the tracer is a blend containing two or more hydrofluorocarbons, or one hydrofluorocarbon-in combination with one or more perfluorocarbons.

The tracer may be added to the compositions of the present invention in predetermined quantities to allow detection of any dilution, contamination or other alteration of the composition.

The additive which may be used with the compositions of the present invention may alternatively be a perfluoropolyether. A common characteristic of perfluoropolyethers is the presence of perfluoroalkyl ether moieties. Perfluoropolyether is synonymous to perfluoropolyalkylether. Other synonymous terms frequently used include ""PFPE", "PFAE", "PFPE oil", "PFPE fluid", and "PFPAE". In some embodiments, the perfluoropolyether has the formula of CF₃-(CF₂)₂-O-[CF(CF₃)-CF₂-O]j'-R'f, and is commercially available from DuPont under the trademark Krytox^{®}. In the immediately preceding formula, j' is 2 100, inclusive and R'f is CF₂CF₃, a C3 to C6 perfluoroalkyl group, or combinations thereof.

Other PFPEs, commercially available from Ausimont of Milan, Italy, and Montedison S.p.A., of Milan, Italy, under the trademarks Fomblin^{®} and Galden^{®}, respectively, and produced by perfluoroolefin photooxidation, can also be used.

PFPE commercially available under the trademark Fomblin^{®}-Y can have the formula of CF₃O(CF₂CF(CF₃)-O-)ₘ (CF₂-O-)ₙ-R_{1f}. Also suitable is CF₃O[CF₂CF(CF₃)O]ₘ(CF₂CF₂O)ₒ,(CF₂O)ₙ-R_{1f}. In the formulae R_{1f} is CF₃, C₂F₅, C₃F₇, or combinations of two or more thereof; (m' + n') is 8 - 45, inclusive; and m/n is 20 - 1000, inclusive; o' is 1; (m'+n'+o') is 8 - 45, inclusive; m'/n' is 20 - 1000, inclusive.

PFPE commercially available under the trademark Fomblin^{®}-Z can have the formula of CF₃O(CF₂CF₂-O-)ₚ(CF₂-O)_{q}CF₃ where (p' + q') is 40 - 180 and p'/q' is 0.5 - 2, inclusive.

Another family of PFPE, commercially available under the trademark Demnum^{™} from Daikin Industries, Japan, can also be used. It can be produced by sequential oligomerization and fluorination of 2,2,3,3-tetrafluorooxetane, yielding the formula of F-[(CF₂)₃-O]ₜ-R_{2f} where R_{2f} is CF₃, C₂F₅, or combinations thereof and t' is 2 - 200, inclusive.

In some embodiments, the PFPE is unfunctionalized. In an unfunctionalized perfluoropolyether, the end group can be branched or straight chain perfluoroalkyl radical end groups. Examples of such perfluoropolyethers can have the formula of C_{r'}F_{(2r'+1)}-A-C_{r'}F_{(2r'+1)} in which each r' is independently 3 to 6; A can be O-(CF(CF₃)CF₂-O)_{w}, O-(CF₂-O)ₓ(CF₂CF₂-O)_{y}, O-(C₂F₄-O)_{w}', O-(C₂F₄-O)ₓ(C₃F₆-O)_{y'}, O-(CF(CF₃)CF₂-O)_{y'}(CF₂-O)_{y}, O-(CF₂CF₂CF₂-O)_{w}, O-(CF(CF₃)CF₂-O)_{x'}(CF₂CF₂-O)_{y'}-(CF₂-O)_{z'}, or combinations of two or more thereof; preferably A is O-(CF(CF₃)CF₂-O)_{w}, O-(C₂F₄-O)_{w'}, O-(C₂F₄-O)_{x'}(C₃F₆-O)_{y'}, O-(CF₂CF₂CF₂-O)_{w'}, or combinations of two or more thereof; w' is 4 to 100; x' and y' are each independently 1 to 100. Specific examples include, but are not limited to, F(CF(CF₃)-CF₂-O)₉-CF₂CF₃, F(CF(CF₃)-CF₂-O)₉-CF(CF₃)₂, and combinations thereof. In such PFPEs, up to 30% of the halogen atoms can be halogens other than fluorine, such as, for example, chlorine atoms.

In other embodiments, the two end groups of the perfluoropolyether, independently, may be functionalized by the same or different groups. A functionalized PFPE is a PFPE wherein at least one of the two end groups of the perfluoropolyether has at least one of its halogen atoms substituted by a group selected from esters, hydroxyls, amines, amides, cyanos, carboxylic acids, sulfonic acids or combinations thereof.

In some embodiments, representative ester end groups include -COOCH₃, -COOCH₂CH₃, -CF₂COOCH₃, -CF₂COOCH₂CH₃, -CF₂CF₂COOCH₃, -CF₂CF₂COOCH₂CH₃, -CF₂CH₂COOCH₃, -CF₂CF₂CH₂COOCH₃, -CF₂CH₂CH₂COOCH₃, -CF₂CF₂CH₂CH₂COOCH₃.

In some embodiments, representative hydroxyl end groups include -CF₂OH, -CF₂CF₂OH, -CF₂CH₂OH,-CF₂CF₂CH₂OH, -CF₂CH₂CH₂OH, -CF₂CF₂CH₂CH₂OH.

In some embodiments, representative amine end groups include -CF₂NR¹R², -CF₂CF₂NR¹R², -CF₂CH₂NR¹R², -CF₂CF₂CH₂NR¹R², -CF₂CH₂CH₂NR¹R², -CF₂CF₂CH₂CH₂NR¹R², wherein R¹ and R² are independently H, CH₃, or CH₂CH₃.

In some embodiments, representative amide end groups include -CF₂C(O)NR¹R², -CF₂CF₂C(O)NR¹R², -CF₂CH₂C(O)NR¹R², -CF₂CF₂CH₂C(O)NR¹R², -CF₂CH₂CH₂C(O)NR¹R², -CF₂CF₂CH₂CH₂C(O)NR¹R², wherein R¹ and R² are independently H, CH₃, or CH₂CH₃.

In some embodiments, representative cyano end groups include -CF₂CN, -CF₂CF₂CN, -CF₂CH₂CN, -CF₂CF₂CH₂CN, -CF₂CH₂CH₂CN, -CF₂CF₂CH₂CH₂CN.

In some embodiments, representative carboxylic acid end groups include -CF₂COOH, -CF₂CF₂COOH, -CF₂CH₂COOH, -CF₂CF₂CH₂COOH, -CF₂CH₂CH₂COOH, -CF₂CF₂CH₂CH₂COOH.

In some embodiments, the sulfonic acid end groups is selected from the group consisting of -S(O)(O)OR³, -S(O)(O)R⁴,-CF₂OS(O)(O)OR³, -CF₂CF₂OS(O)(O)OR³, -CF₂CH₂OS(O)(O)OR³, -CF₂CF₂CH₂OS(O)(O)OR³, -CF₂CH₂CH₂OS(O)(O)OR³, -CF₂CF₂CH₂CH₂OS(O)(O)OR³, -CF₂S(O)(O)OR³, -CF₂CF₂S(O)(O)OR³, -CF₂CH₂S(O)(O)OR³,-CF₂CF₂CH₂S(O)(O)OR³, -CF₂CH₂CH₂S(O)(O)OR³, -CF₂CF₂CH₂CH₂S(O)(O)OR³, -CF₂OS(O)(O)R⁴, -CF₂CF₂OS(O)(O)R⁴, -CF₂CH₂OS(O)(O)R⁴, -CF₂CF₂CH₂OS(O)(O)R⁴, -CF₂CH₂CH₂OS(O)(O)R⁴, -CF₂CF₂CH₂CH₂OS(O)(O)R⁴, wherein R³ is H, CH₃, CH₂CH₃, CH₂CF₃, CF₃, or CF₂CF₃, R⁴ is CH₃, CH₂CH₃, CH₂CF₃, CF₃, or CF₂CF₃.

The additives may be members of the triaryl phosphate family of EP (extreme pressure) lubricity additives, such as batylated-triphenyl phosphates (BTPP), or other alkylated triaryl phosphate esters, such as those sold under the trademark Syn-0-Ad^{®} 8478 from Akzo Chemicals, tricresyl phosphates and related compounds. Additionally, the metal dialkyl dithiophosphates (e.g., zinc dialkyl dithiophosphate (or ZDDP), including the commercially available Lubrizol 1375 and other members of this family of chemicals is used in compositions of the disclosed compositions. Other antiwear additives include natural product oils and asymmetrical polyhydroxyl lubrication additives, such as the commercially available Synergol TMS (International Lubricants).

In some embodiments, stabilizers such as antioxidants, free radical scavengers, and water scavengers and mixtures thereof are included. Such additives in this category can include, but are not limited to, butylated hydroxy toluene (BHT), epoxides, and mixtures thereof. Corrosion inhibitors include dodecyl succinic acid (DDSA), amine phosphate (AP), oleoyl sarcosine, imidazone derivatives and substituted sulfphonates.

In one embodiment, the compositions disclosed herein may be prepared by any convenient method to combine the desired amounts of the individual components. A preferred method is to weigh the desired component amounts and thereafter combine the components in an appropriate vessel. Agitation may be used, if desired.

In another embodiment, the compositions disclosed herein may be prepared by a method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

Compositions of the present invention have zero ozone depletion potential and low global warming potential (GWP). Additionally, the compositions of the present invention will have global warming potentials that are less than many hydrofluorocarbon refrigerants currently in use.

### Methods of use

The compositions disclosed herein are useful as heat transfer compositions. Additionally, in liquid or gaseous form, the disclosed compositions may act as working fluids used to carry heat from a heat source to a heat sink. Such heat transfer compositions may also be useful as refrigerants in a cycle wherein the fluid undergoes phase changes; that is, from a liquid to a gas and back or vice versa.

The compositions disclosed herein may be useful as low GWP (global warming potential) replacements for currently used refrigerants, including but not limited to R410A (ASHRAE designation for a blend of 50 weight percent R125 and 50 weight percent R32) or R404A (ASHRAE designation for a blend of 44 weight percent R125, 52 weight percent R143a (1,1,1-trifluoroethane), and 4.0 weight percent R134a).

Often replacement refrigerants are most useful if capable of being used in the original refrigeration equipment designed for a different refrigerant. Additionally, the compositions as disclosed herein may be useful as replacements for R410A or R404A in equipment designed for R410A or R404A with some system modifications. Further, the compositions as disclosed herein may be useful for replacing R404A or R410A in equipment specifically modified for or produced entirely for these new compositions comprising HFO-1234yf and HFC-32.

In many applications, some embodiments of the disclosed compositions are useful as refrigerants and provide at least comparable cooling performance (meaning cooling capacity and energy efficiency) as the refrigerant for which a replacement is being sought.

In some embodiments, the compositions disclosed herein are useful for any positive displacement compressor system designed for any number of heat transfer compositions. Additionally, many of the compositions disclosed are useful in new equipment utilizing positive displacement compressors to provide similar performance to the aforementioned refrigerants.

In one embodiment, disclosed herein is a process to produce cooling comprising condensing a composition as disclosed herein and thereafter evaporating said composition in the vicinity of a body to be cooled.

In another embodiment, disclosed herein is a process to produce heat comprising condensing a composition as disclosed herein in the vicinity of a body to be heated and thereafter evaporating said composition.

In some embodiments, the use of the above disclosed compositions includes using the composition as a heat transfer composition in a process for producing cooling, wherein the composition is first cooled and stored under pressure and when exposed to a warmer environment, the composition absorbs some of the ambient heat, expands, and the warmer environment is thusly cooled.

The compositions as disclosed herein are thus useful in automotive heat pumps and have been found to provide improved heating capacity versus HFC-134a and have a GWP less than 150.

Vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator, by withdrawing heat from the environment, at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

In one embodiment, there is provided an air-conditioning or heat pump apparatus containing a composition as disclosed herein.

The compositions as disclosed herein may also be useful as power cycle working fluids in heat recovery processes, such as organic Rankine cycles. In relation to this embodiment is disclosed a process for recovering heat which comprises: (a) passing a working fluid through a first heat exchanger in communication with a process which produces heat; (b) removing said working fluid from said first heat exchanger; (c) passing said working fluid to a device that produces mechanical energy; and (d) passing said working fluid to a second heat exchanger.

The power cycle working fluids for the above described method may be any of the compositions as disclosed herein. In the first heat exchanger heat is absorbed by the working fluid causing it to be evaporated. The heat source may comprise any source of available heat including waste heat. Such heat sources include fuel cells and internal combustion engines (exhaust gas).

At the second heat exchanger, the working fluid is condensed and then returned to the first heat exchanger thus completing the cycle. A compressor or pump may be included in the cycle between the second heat exchanger and the first heat exchanger to elevate the pressure of the working fluid.

### EXAMPLES

The concepts disclosed herein will be further described in the following examples, which do not limit the scope of the invention described in the claims.

### EXAMPLE 1

### Heating Performance

Table 1 shows the performance of the inventive composition and some exemplary compositions as compared to HFC-134a, HFO-1234yf, and R410A at typical heat pump conditions. In Table 1, Evap Pres is evaporator pressure, Cond Pres is condenser pressure, Comp Disch T is compressor discharge temperature, COP is coefficient of performance (analogous to energy efficiency), and CAP is capacity. The calculated data are based on physical property measurements and the following specific conditions.

| | |
|---|---|
| Evaporator temperature | 32 °F (0 °C) |
| Condenser temperature | 113 °F (45 °C) |
| Subcool amount | 21.6 °F (12 K) |
| Return gas superheat | 5.4 °F (3 K) |
| Compressor efficiency is | 70% |

**TABLE 1**

| Composition | Evap Press (kPa) | Cond Press (kPa) | Compr Disch Temp (°C) | COP | COP relative to R410A (%) | CAP (kJ/m3) | CAP relative to R410A (%) | Temp Glide, °C (cond/ evap) |
|---|---|---|---|---|---|---|---|---|
| HFC-134a | 293 | 1160 | 64.6 | 4.724 | 106 | 2795 | 43 | 0 |
| HFO-1234yf | 314 | 1151 | 54 | 4.621 | 103.7 | 2681 | 41.3 | 0 |
| R410A | 794 | 2695 | 83 | 4.547 | 100 | 6470 | 100 | 0.17/0.1 |
| HFO-1234yf/HFC-32 78.5/21.5wt% | 490 | 1766 | 70 | 4.563 | 102.4 | 4161 | 64 | 7.2/6.5 |
| HFO-1234yf/HFC-32 57.5 / 42.5 wt % | 632 | 2206 | 80 | 4.496 | 100.9 | 5273 | 81 | 5.0/4.9 |
| HFO-1234yf/HFC-32 27.5/72.5 wt % | 770 | 2623 | 93 | 4.485 | 100.6 | 6506 | 100 | 1.2/0.9 |
| HFO-1234yf/HFC-32 42.5/57.5wt% | 712 | 2445 | 86 | 4.607 | 100.6 | 5947 | 91.5 | 2.8/2.6 |

These data indicates that these compositions may serve as replacements for R410A in heat pump applications. In particular, the composition having 78.5 weight percent HFO-1234yf and 21.5 weight percent HFC-32 provides significantly improved heating capacity versus HFC-134a, such that it could serve as a low GWP replacement for HFC-134a in, for example, automotive heat pumps.

### EXAMPLE 2

### Flammability

Flammable compounds may be identified by testing under ASTM (American Society of Testing and Materials) E681-2004, with an electronic ignition source. Such tests of flammability were conducted on compositions of the present disclosure at 101 kPa (14.7 psia), 50 percent relative humidity, and 23 °C and 100 °C at various concentrations in air in order to determine the lower flammability limit (LFL). The results are given in Table 2.

**TABLE 2**

| Composition (weight percent) | LFL (vol % in air) | |
|---|---|---|
| | 23 °C | 100 °C |
| HFO-1234yf/HFC-32 (45/55 wt%) | 11.0 | 10.0 |
| HFO-1234yf/HFC-32 (55/45 wt%) | 10.0 | 9.0 |
| HFO-1234yf/HFC-32 (70/30 wt%) | 8.5 | 7.5 |

These data demonstrate that the compositions comprising HFO-1234yf and HFC-32 with less than 45 weight percent HFO-1234yf may be classified as non-flammable in Japan due to LFL of greater than 10 volume percent.

### EXAMPLE 3

### Global Warming Potentials

Values for global warming potential (GWP) for the invnetive composition and some examplary compositions are listed in Table 3 as compared to GWP values for HCFC-22, HFC-134a, R404A, and R410A. The GWP for the pure components are listed for reference. The GWP values for compositions containing more than one component are calculated as weighted averages of the individual component GWP values. The values for the HFCs are taken from the "Climate Change 2007 - IPCC (Intergovernmental Panel on Climate Change) Fourth Assessment Report on Climate Change", from the section entitled "Working Group 1 Report: "The Physical Science Basis", Chapter 2, pp. 212-213, Table 2.14. The value for HFO-1234yf was published in Papadimitriou et al., Physical Chemistry Chemical Physics, 2007, vol. 9, pp. 1-13. Specifically, the 100 year time horizon GWP values are used.

**TABLE 3**

| **Component or composition** | **GWP** |
|---|---|
| HCFC-22 | 1810 |
| HFC-134a | 1430 |
| HFC-32 | 675 |
| HFO-1234yf | 4 |
| R404A | 3922 |
| R507 | 3985 |
| R410A | 2088 |
| HFO-1234yf/HFC-32 (90/10 wt %) | 71 |
| HFO-1234yf/HFC-32 (80/20 wt %) | 138 |
| HFO-1234yf/HFC-32 (78.5/21.5 wt %) | 148 |
| HFO-1234yf/HFC-32 (70/30 wt %) | 205 |
| HFO-1234yf/HFC-32 (57.5/42.5 wt %) | 289 |
| HFO-1234yf/HFC-32 (55/45 wt %) | 306 |
| HFO-1234yf/HFC-32 (50/50 wt %) | 340 |
| HFO-1234yf/HFC-32 (45/55 wt %) | 373 |
| HFO-1234yf/HFC-32 (35/65 wt %) | 440 |
| HFO-1234yf/HFC-32 (30/70 wt %) | 474 |
| HFO-1234yf/HFC-32 (27.5/72.5 wt %) | 490 |
| HFO-1234yf/HFC-32 (20/80wt %) | 541 |

Many compositions as disclosed herein provide lower GWP alternatives to HCFC-22, R404A, and/or R410A etc. Additionally, the addition of HFO-1234yf to HFC-32 can provide significantly lower GWP refrigerants than HFC-32 alone.

### EXAMPLE 4

### Refrigeration Performance

Table 4 shows the performance of the inventive composition and some exemplary compositions as compared to HFO-1234yf, HFC-32, and R404A. In Table 4, Evap Pres is evaporator pressure, Cond Pres is condenser pressure, Comp Disch T is compressor discharge temperature, COP is coefficient of performance (analogous to energy efficiency), and CAP is cooling capacity. The data are based on the following conditions.

| | |
|---|---|
| Evaporator temperature | 14 °F (-10 °C) |
| Condenser temperature | 104 °F (40 °C) |
| Subcool amount | 2.8 °F (6 K) |
| Return gas temperature | 65 °F (18°C) |
| Compressor efficiency is | 70% |

Note that the evaporator superheat enthalpy is included in cooling capacity and energy efficiency determinations.

**TABLE 4**

| Composition | Evap Press (kPa) | Cond Press (kPa) | Compr Disch Temp (°C) | COP | COP relative to R404A (%) | CAP (kJ/m3) | CAP relative to R404A (%) | Temp Glide, °C (avg) |
|---|---|---|---|---|---|---|---|---|
| R404A | 436 | 1833 | 84.9 | 2.836 | | 2602 | | 0.37 |
| HFO-1234yf | 221 | 1016 | 76.5 | 3.024 | 107 | 1490 | 57.2 | 0 |
| HFC-32 | 581 | 2485 | 144 | 2.756 | 97.2 | 3777 | 145 | 0 |
| HFO-1234yf/HFC-32 (35/65 wt %) | 530 | 2243 | 119 | 2.800 | 98.7 | 3337 | 128 | 1.8 |
| HFO-1234yf/HFC-32 (45/55 wt %) | 497 | 2124 | 112 | 2.809 | 99.0 | 3127 | 120.2 | 3.1 |
| HFO-1234yf/HFC-32 (55/45 wt %) | 457 | 1982 | 106 | 2.827 | 99.7 | 2892 | 111 | 4.6 |
| HFO-1234yf/HFC-32 (70/30 wt %) | 387 | 1726 | 97.2 | 2.873 | 101 | 2498 | 96.0 | 6.3 |
| HFO-1234yf/HFC-32 (78.5/21.5wt %) | 343 | 1556 | 91.8 | 2.912 | 103 | 2247 | 86.4 | 6.6 |
| HFO-1234yf/HFC-32 (80/20 wt %) | 335 | 1524 | 90.9 | 2.917 | 103 | 2199 | 84.5 | 6.5 |
| HFO-1234yf/HFC-32 (90/10 wt %) | 279 | 1291 | 84.3 | 2.968 | 105 | 1869 | 71.8 | 4.9 |

The data in Table 4 demonstrates that compositions from about 45 weight percent to about 80 weight percent HFO-1234yf have capacity ±20% that of R404A and would therefore perform as replacements for R404A in low temperature refrigeration applications. Also, for the compositions in Table 4, the energy efficiency (displayed above as COP) falls within just a few percent of or even improves over energy efficiency for R404A. They also have significantly lower compressor discharge temperatures then HFC-32 which can increase compressor life.

### EXAMPLE 5

### Refrigeration Performance

Table 5 shows the performance of the inventive composition and some exemplary compositions as compared to HFO-1234yf, HFC-32, and R404A. In Table 5, Evap Pres is evaporator pressure, Cond Pres is condenser pressure, Comp Disch T is compressor discharge temperature, COP is coefficient of performance (analogous to energy efficiency), and CAP is cooling capacity. The data are based on the following conditions.

| | |
|---|---|
| Evaporator temperature | 14 °F (-35 °C) |
| Condenser temperature | 104 °F (40 °C) |
| Subcool amount | 2.8 °F (6 K) |
| Return gas temperature | 65 °F (18°C) |
| Compressor efficiency is | 70% |

Note that the evaporator superheat enthalpy is included in cooling capacity and energy efficiency determinations.

**TABLE 5**

| Composition | Evap Press (kPa) | Cond Press (kPa) | Compr Disch Temp (°C) | CAP (kJ/m3) | CAP relative to R404A (%) | COP | COP relative to R404A (%) | Temp Glide, °C (avg) |
|---|---|---|---|---|---|---|---|---|
| R404A | 167 | 1833 | 126 | 974.4 | | 1.573 | | 0.37 |
| HFO-1234yf | 78.3 | 1016 | 114 | 519.4 | 53.3 | 1.682 | 107 | 0 |
| HFC-32 | 221 | 2485 | 229 | 1404 | 144 | 1.478 | 94.0 | 0 |
| HFO-1234yf/HFC-32 (35/65 wt %) | 203 | 2243 | 184 | 1246 | 128 | 1.522 | 96.8 | 1.6 |
| HFO-1234yf/HFC-32 (45/55 wt %) | 188 | 2124 | 174 | 1156 | 119 | 1.531 | 97.3 | 2.8 |
| HFO-1234yf/HFC-32 (55/45 wt %) | 171 | 1982 | 163 | 1058 | 109 | 1.545 | 98.2 | 4.3 |
| HFO-1234yf/HFC-32 (70/30 wt %) | 142 | 1726 | 147 | 897 | 92.1 | 1.579 | 100 | 6.4 |
| HFO-1234yf/HFC-32 (78.5/21.5wt %) | 124 | 1556 | 139 | 796 | 81.7 | 1.602 | 102 | 6.1 |
| HFO-1234yf/HFC-32 (80/20 wt %) | 121 | 1524 | 137 | 777 | 79.7 | 1.606 | 102 | 6.0 |
| HFO-1234yf/HFC-32 (90/10 wt %) | 99.7 | 1291 | 126 | 654 | 67.1 | 1.643 | 104.5 | 4.7 |

The data demonstrates that compositions from about 45 weight percent to about 80 weight percent HFO-1234yf have capacity ±20% that of R404A and would therefore perform as replacements for R404A in low temperature refrigeration applications. Also, for the compositions in Table 5, the energy efficiency (displayed above as COP) falls within just a few percent of or even improves over energy efficiency for R404A. They also have significantly lower compressor discharge temperatures then HFC-32 which can increase compressor life.

## Claims

1. Use of a composition comprising about 78.5 weight percent 2,3,3,3-tetrafluoropropene and about 21.5 weight percent difluoromethane in an automotive heat pump.

2. Use as claimed in claim 1 wherein said heat pump is designed to use 1,1,1,2-tetrafluoroethane.

3. Use as claimed in claim 1 wherein said composition further comprises at least one lubricant selected from the group consisting of mineral oils, alkylbenzenes, synthetic paraffins, synthetic naphthenes, poly alpha olefins, polyalkylene glycols, dibasic acid esters, polyesters, neopentyl esters, polyvinyl ethers, silicones, silicate esters, fluorinated compounds, phosphate esters and mixtures thereof.

4. Use as claimed in claim 1 wherein said composition further comprises at least one additive selected from the group consisting of lubricants, dyes, solubilizing agents, compatibilizers, stabilizers, tracers, perfluoropolyethers, anti wear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof.

5. An automotive air conditioner or heat pump containing a composition comprising about 78.5 weight percent 2,3,3,3-tetrafluoropropene and about 21.5 weight percent difluoromethane.

## Patentansprüche

1. Verwendung einer Zusammensetzung, umfassend etwa 78,5 Gewichtsprozent 2,3,3,3-Tetrafluorpropen und etwa 21,5 Gewichtsprozent Difluormethan, in einer Fahrzeugwärmepumpe.

2. Verwendung nach Anspruch 1, wobei die Wärmepumpe zur Verwendung von 1,1,1,2-Tetrafluorethan ausgelegt ist.

3. Verwendung nach Anspruch 1, wobei die Zusammensetzung weiterhin zumindest ein Schmiermittel umfasst, das ausgewählt ist aus der Gruppe, bestehend aus Mineralölen, Alkylbenzolen, synthetischen Paraffinen, synthetischen Naphthenen, Polyalphaolefinen, Polyalkylenglykolen, Estern von zweibasigen Säuren, Polyestern, Neopentylestern, Polyvinylethern, Silikonen, Silikatestern, fluorierten Verbindungen, Phosphatestern und Gemischen davon.

4. Verwendung nach Anspruch 1, wobei die Zusammensetzung weiterhin zumindest ein Additiv umfasst, das ausgewählt ist aus der Gruppe, bestehend aus Schmiermitteln, Farbstoffen, Lösungsvermittlern, Verträglichkeitsvermittlern, Stabilisatoren, Tracern, Perfluorpolyethern, Antiverschleißmitteln, Extremdruckmitteln, Korrosions- und Oxidationshemmern, Metallflächenenergiereduzierern, Metallflächendeaktivatoren, Fängern freier Radikale, Schaumkontrollmitteln, Viskositätsindexverbesserern, Pourpointerniedrigern, Detergenzien, Viskositätseinstellern und Gemischen davon.

5. Fahrzeugklimaanlage oder -wärmepumpe, enthaltend eine Zusammensetzung, die etwa 78,5 Gewichtsprozent 2,3,3,3-Tetrafluorpropen und etwa 21,5 Gewichtsprozent Difluormethan umfasst.

## Revendications

1. Utilisation d'une composition comprenant environ 78,5 pour-cent en poids de 2,3,3,3-tétrafluoropropène et environ 21,5 pour-cent en poids de difluorométhane dans une pompe à chaleur d'automobiles.

2. Utilisation selon la revendication 1, dans laquelle ladite pompe à chaleur est conçue pour utiliser du 1,1,1,2-tétrafluoroéthane.

3. Utilisation selon la revendication 1, dans laquelle ladite composition comprend en outre au moins un lubrifiant choisi dans le groupe constitué par des huiles minérales, des alkylbenzènes, des paraffines synthétiques, des naphtènes synthétiques, des polyoléfines alpha, des polyalkylène glycols, des esters d'acide dibasique, des polyesters, des esters de néopentyle, des éthers de polyvinyle, des silicones, des esters de silicate, des composés fluorés, des esters de phosphate et des mélanges de ceux-ci.

4. Utilisation selon la revendication 1, dans laquelle ladite composition comprend en outre au moins un additif choisi dans le groupe constitué par des lubrifiants, des colorants, des agents solubilisants, des agents de compatibilité, des stabilisants, des traceurs, des perfluoropolyéthers, des agents anti-usure, des agents extrême pression, des inhibiteurs de corrosion et d'oxydation, des réducteurs d'énergie de surface métallique, des désactivateurs de surface métallique, des piégeurs de radicaux libres, des agents de contrôle de mousse, des améliorateurs d'indice de viscosité, des additifs abaissant le point d'écoulement, des détergents, des ajusteurs de viscosité et des mélanges de ceux-ci.

5. Conditionneur d'air ou pompe à chaleur d'automobiles contenant une composition comprenant environ 78,5 pour-cent en poids de 2,3,3,3-tétrafluoropropène et environ 21,5 pour-cent en poids de difluorométhane.
